# EUROPÄISCHE PATENTANMELDUNG

(11) **EP 1 662 232 A1**
(43) Veröffentlichungstag der Anmeldung: **31.05.2006**
(21) Anmeldenummer: 05024811.1
(22) Anmeldetag: 14.11.2005
(51) Int. Cl.: G01D 5/14, G01D 5/16

(54) **Linearer Positionssensor**

(30) Priorität: 30.11.2004 DE 102004057909
(71) Anmelder: Bourns, Inc., Riverside, California 92507 (US)
(72) Erfinder: Schödlbauer, Dieter, Dr., 81825 München (DE)
(74) Vertreter: von Bülow, Tam

(57) **Zusammenfassung**

Der lineare Positionssensor weist einen Permanentmagneten und einen Magnetfeldsensor auf, der ein von der Richtung (α) des Magnetfeldes abhängiges Ausgangssignal erzeugt. Der Permanentmagnet (1) und der Magnetfeldsensor (5) sind relativ zueinander längs eines linearen Verschiebeweges (3) verschieblich. Eine Auswerteschaltung (13) wandelt das Ausgangssignal des Magnetfeldsensors (5) in ein signal um, das dem linearen verschiebeweg (7) zwischen Magnetfeldsensor (5) und Permanentmagnet (1) entspricht.

## Beschreibung

Die Erfindung bezieht sich auf einen linearen Positionssensor gemäß dem Oberbegriff des Patentanspruches 1.

Ein solcher Positionssensor ist beispielsweise aus der EP 0 596 068 B1 (entspricht DE 693 06 085 T2) bekannt. Dort ist ein mit einem linear verschieblichen Bauteil verbundener Permanentmagnet in einem Hauptluftspalt zwischen zwei ferromagnetischen Statorteilen linear verschieblich, wobei eines der Statorteile einen Sekundärluftspalt aufweist, in welchem ein Magnetfeldsensor angeordnet ist. Der Magnetfeldsensor vom Typ einer Hallsonde ist dabei so in dem Sekundärluftspalt angeordnet, daß die Magnetfeldlinien im wesentlichen senkrecht zur Oberfläche des Magnetfeldsensors verlaufen und sich bei Verschiebung des Permanentmagneten lediglich die Feldstärke ändert.

Die DE 102 19 473 B3 zeigt eine Meßeinrichtung mit einem Hallsensor, der zentrisch und axial beweglich in einem Magnetrohr angeordnet ist, wobei das Magnetrohr je hälftig mit gegensätzlicher Polarität quermagnetisiert ist.

Die DE 197 01 927 C1 zeigt einen Sensor zum Erfassen einer rotatorischen oder translatorischen Bewegung mit einem Permanentmagneten, der ein symmetrisches Magnetfeld erzeugt und einem analogen, magnetosensitiven Sensorelement, das so ausgerichtet ist, daß der Normalvektor der sensitiven Fläche des Sensorelementes einen Winkel zu einem vom Sensorelement senkrecht auf die Achse des Permanentmagneten zeigenden Vektors aufweist. Hierdurch soll ein nicht symmetrischer Spannungsverlauf des Ausgangssignales des Sensorelementes erreicht werden, so daß eine Richtungsumkehr der Bewegung leicht erfaßt werden kann.

Das symmetrische Magnetfeld wird ebenfalls durch einen quermagnetisierten hohlzylinderförmigen Magneten erzeugt.

Aufgabe der vorliegenden Erfindung ist es, den Positionssensor der eingangs genannten Art dahingehend zu verbessern, daß er bei vereinfachtem Aufbau eine präzise Wegmessung ermöglicht.

Diese Aufgabe wird durch die im Patentanspruch 1 angegebenen Merkmale gelöst. Vorteilhafte Ausgestaltungen und Weiterbildungen der Erfindung sind den Unteransprüchen zu entnehmen.

Das Grundprinzip der Erfindung besteht darin, daß ein Magnetfeldsensor verwendet wird, dessen Ausgangssignal von der Richtung des ihn durchflutenden Magnetfeldes abhängt. Da sich die Richtung des Magnetfeldes eines Permanentmagneten lageabhängig ändert, kann damit aus der Richtung des Magnetfeldes und somit aus dem Ausgangssignal des richtungsabhängigen Magnetfeldsensors ein die relative Lage zwischen dem Magnetfeldsensor und dem Permanentmagneten anzeigendes Signal erzeugt werden, das dann von einer Auswerteeinheit bei Bedarf in ein dem zu messenden weg direkt proportionales Signal umgewandelt werden kann, das beispielsweise als analoges Signal, als digitales Signal oder als pulsweitenmoduliertes Signal vorliegt.

Vorzugsweise ist der Magnetfeldsensor aus magnetoresistiven Elementen aufgebaut, deren ohmscher Widerstand von dem Winkel zwischen einem den Sensor durchfließenden Strom und der Magnetfeldrichtung abhängt.

Im folgenden wird die Erfindung anhand eines Ausführungsbeispieles im Zusammenhang mit der Zeichnung ausführlicher erläutert. Es zeigt:
- Fig. 1: eine Prinzipskizze eines Positionssensors zur Erläuterung des Grundprinzips der Erfindung;
- Fig. 2: ein Prinzipschaltbild des Positionssensors nach einem Ausführungsbeispiel der Erfindung; und
- Fig. 3: ein konkretes Ausführungsbeispiel eines Positionssensors nach der Erfindung.

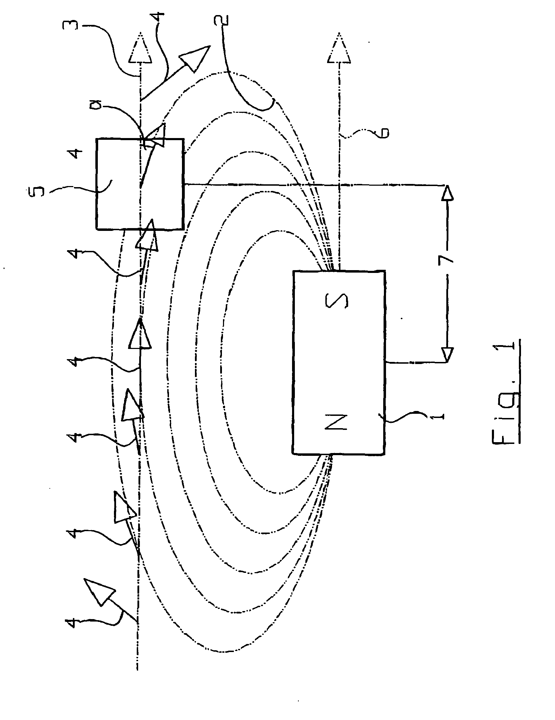

In Fig. 1 ist ein Permanentmagnet 1 dargestellt, der in Axialrichtung magnetisiert ist und ein Magnetfeld 2 erzeugt, das durch gestrichelte Magnetfeldlinien angedeutet ist. Betrachtet man den magnetischen Feldverlauf entlang einer Trajektorie 3, so stellt man fest, daß sich längs dieser Trajektorie nicht nur der Betrag sondern auch die Richtung des lokalen Magnetfeldes ändert. Diese Richtung ist durch Pfeile 4 dargestellt. Wird nun ein Magnetfeldsensor 5 längs dieser Trajektorie 3 bewegt, so empfängt er ortsabhängig in Längsrichtung der Trajektorie 3 magnetische Feldlinien mit unterschiedlicher Richtung entsprechend den Pfeilen 4, die die örtliche Richtung des Magnetfeldes an verschiedenen Orten der Trajektorie 3 anzeigen. Umgekehrt kann auch der Permanentmagnet 1 samt seinem Magnetfeld 2 längs des Pfeiles 6 verschoben werden und der Magnetfeldsensor 5 ortsfest angeordnet sein, wobei dann der Verschiebeweg des Pfeiles 6 parallel zur Trajektorie 3 liegt.

Der Magnetfeldsensor 5 ist als richtungsabhängiger Sensor ausgebildet, beispielsweise ein o.g. AMR-Sensor.

In Fig. 1 sind die Magnetfeldlinien 2 schematisch in etwa in der Form einer Ellipse dargestellt. Man erkennt, daß der Winkel α zwischen der lokalen Magnetfeldrichtung (vgl. Pfeile 4) und der Trajektorie 3 nicht-linear vom relativen verschiebeweg 7 zwischen dem Permanentmagneten 1 und dem Magnetfeldsensor 5 abhängt, jedoch gemäß einer stetigen Funktion.

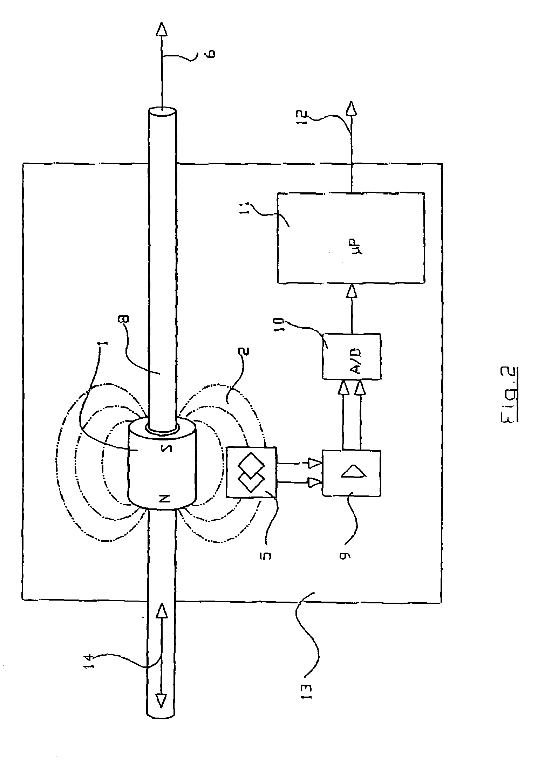

Fig. 2 zeigt in vereinfachter Form das Prinzip eines linearen Positionssensors, bei dem ein hohlzylindrischer Permanentmagnet 1 zum Einsatz kommt, der an einer axial verschieblichen zylindrischen Stange 8 befestigt ist, wobei deren relative Position in Bezug auf den ortsfesten Magnetfeldsensor 5 gemessen werden soll. Der Permanentmagnet 1 erzeugt wiederum ein Magnetfeld 2, dessen Betrag und Richtung am Ort des Magnetfeldsensors 5 jeweils von der Position des Magneten 1 längs eines Verschiebeweges 6 abhängt. Der Magnetfeldsensor 5 erfaßt das Magnetfeld 2 in einer Ebene, die durch das Zentrum der Stange 8 verläuft, und zwar vorzugsweise gemäß Richtung und Betrag. Dabei stehen als Rohmeßdaten zwei analoge Spannungswerte zur Verfügung, die in einer nachgeschalteten Verstärkerstufe 9 vorverarbeitet und einem Analog/Digital-Wandler 10 zugeführt werden. Nach Umwandlung in digitale Zahlenwerte erfolgt in einer Rechenstufe 11 die Bestimmung der lokalen Magnetfeldrichtung und deren Zuordnung zu der gewünschten Meßgröße, d.h. dem linearen Verschiebeweg. In der Rechenstufe 11 können auch noch weitere systematische Korrekturen durchgeführt werden.

Der Magnetfeldsensor 5, der Verstärker 6, der Analog/Digital-Wandler 10 und die Rechenstufe 11 können in einem integrierten Bauteil zusammengefaßt sein. Am Signalausgang 12 der Rechenstufe 11 wird dann die gesuchte weginformation als Signal ausgegeben, das in digitaler Form oder auch analoger oder pulsweitenmodulierter Form zur verfügung stehen kann.

Die bisher beschriebenen Teile können in einem gemeinsamen Gehäuse 13 angeordnet sein, wobei die Stange 8 samt dem Magneten 1 relativ zum Gehäuse verschoben werden können, wie durch den Pfeil 14 angedeutet. Der Magnetfeldsensor 5 ist dann ortsfest in dem Gehäuse 13 angeordnet.

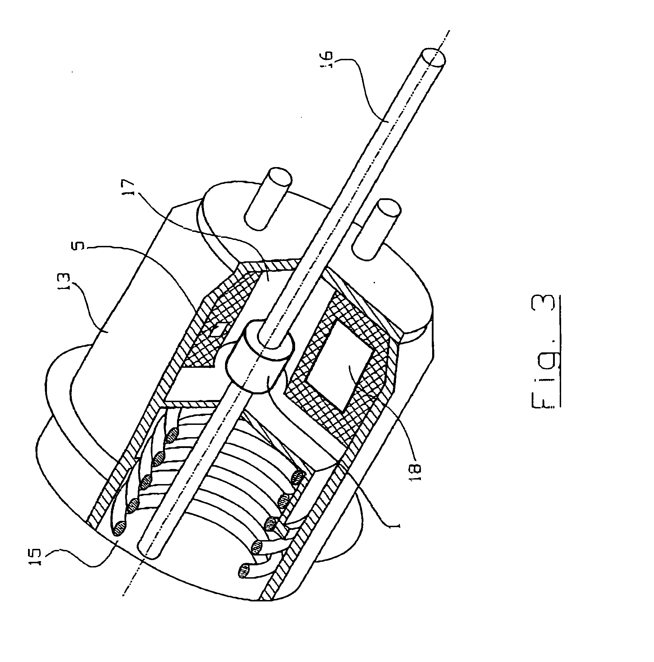

Fig. 3 zeigt beispielhaft eine praktische Ausführungsform des Linearwegsensors in Verbindung mit einer Unterdruckdose 15, deren Stößel 16 druckabhängig linear verschoben wird, wobei dessen Position bzw. Auslenkung bestimmt werden soll.

Der Stößel 16 ist in dem Gehäuse 13 linear verschieblich gelagert und trägt im Inneren einer Kammer 17 den Permanentmagneten 1, in dessen hier nicht dargestellten Magnetfeld der Magnetfeldsensor 5 liegt. In der Kammer 13 ist ebenfalls die Auswerteschaltung untergebracht, die aus den oben beschriebenen Komponenten des Verstärkers 9, des A/D-wandlers 10 und der Rechenstufe 11 besteht. Diese Komponenten sind insgesamt durch einen Block 18 angedeutet, der in der Kammer 17 angeordnet ist.

Dem Fachmann ist klar, daß die Erfindung auf jegliche Form von Linearwegsensoren anwendbar ist und nicht auf das hier beschriebene Beispiel einer Unterdruckdose beschränkt ist.

## Patentansprüche

1. Linearer Positionssensor mit einem Permanentmagneten
(1) und einem Magnetfeldsensor (5), wobei der Permanentmagnet (1) und der Magnetfeldsensor (5) relativ zueinander längs eines Verschiebeweges (3, 6) linear verschieblich sind und der Magnetfeldsensor (5) im Magnetfeld (2) des Permanentmagneten (1) angeordnet ist,
**dadurch gekennzeichnet,**
**daß** der Magnetfeldsensor (5) ein von der Richtung (α) des Magnetfeldes abhängiges Ausgangssignal erzeugt und
**daß** eine Auswerteschaltung (13) vorgesehen ist, die das Ausgangssignal des Magnetfeldsensors (5) in ein Signal umwandelt, das dem linearen Verschiebeweg (7) zwischen Magnetfeldsensor (5) und Permanentmagnet (1) entspricht.

2. Linearer Positionssensor nach Anspruch 1, **dadurch gekennzeichnet,**
**daß** der Magnetfeldsensor (5) aus magnetoresistiven Elementen aufgebaut ist.

3. Linearer Positionssensor nach Anspruch 2, **dadurch gekennzeichnet,**
**daß** der feldrichtungssempfindliche Magnetfeldsensor (5) aus Hall-Effekt-Platten aufgebaut ist.

4. Linearer Positionssensor nach Anspruch 1, 2 oder 3, **dadurch gekennzeichnet,**
**daß** der Permanentmagnet (1) fest mit einem linear gegenüber einem Gehäuse (13) verschieblichen Bauteil (16) verbunden ist und
**daß** der Magnetfeldsensor (5) ortsfest in dem Gehäuse (13) angeordnet ist.

5. Linearer Positionssensor nach Anspruch 4, **dadurch gekennzeichnet,**
**daß** der Permanentmagnet ein in Axialrichtung magnetisierter hohlzylindrischer Magnet ist.

6. Linearer Positionssensor nach einem der Ansprüche 1 bis 5, **dadurch gekennzeichnet,**
**daß** die Auswerteschaltung eine Recheneinheit (11) aufweist.

7. Linearer Positionssensor nach Anspruch 6, **dadurch gekennzeichnet,**
**daß** die Auswerteschaltung zusätzlich einen Verstärker (9) und einen Analog/Digital-Wandler (10) aufweist.
